# EUROPEAN PATENT APPLICATION

(11) **EP 0 535 988 A2**
(43) Date of publication of application: **07.04.1993**
(21) Application number: 92309031.0
(22) Date of filing: 02.10.1992
(51) Int. Cl.: G06F 15/74, G06F 15/70, G06F 3/00, G06K 11/08

(54) **Data input apparatus and methods**

(30) Priority: 04.10.1991 JP 283964/91
(71) Applicant: SIGMAX KABUSHIKI KAISHA, Naka-ku Yokohama-shi Kanagawa (JP)
(72) Inventor: Watanabe, Masaharu, c/o Sigmax Kabushiki Kaisha, Yokohama-shi, Kanagawa (JP)
(74) Representative: Pilch, Adam John Michael

(57) **Abstract**

In an input apparatus, the image of a surface of an input operation unit (12) is taken by a television camera (11) and, when a change occurs in the brightness of a predetermined mark region (MKj) of the image represented by the video signal (VD) thereof, an operation position judgment unit (10) judges that an operation element at the position where the brightness has been changed has been operated by the operator.

It is therefore possible to simplify the construction of an operation input system for forming operation input information since no signal or power line is needed to link the input operation unit (12) to the input apparatus.

## Description

The present invention relates to input apparatus and methods, and more particularly to input apparatus and methods for providing operation input information in response to operation by an operator.

A means for generating operation input information in accordance with an input by an operator is known in which a switch having a contact is arranged at a predetermined position at which the operator is to operate the switch, and an electrical on-off signal is read into a control processing unit when the switch is operated by the operator.

In such a contact-type switch, however, since it is necessary to supply the input operation information to the control processing unit via an electrical line, the overall size of the construction for supplying the operation input information to the operation processing unit may be large.

For example, in the case of constructing a so-called auto system in which only designated operators should be able to fasten or undo the lock of a gate to a residence or the like, it is necessary, in addition to providing at least a power line for supplying power to an operation input switch, to collect operation input information from the operation input switch provided at the gate to a central control processing unit which is located remote from the position of the gate, through a signal line provided exclusively for this purpose.

Further, in the case of constructing a medical care system in a hospital where a patient in bed in each room is to send calling information to the nurse station, it is necessary to provide a switch having a contact in each room, and to transfer input information obtained from the switch when the patient has performed an input operation to the central control processing unit provided at the nurse station through a signal line provided exclusively for this purpose.

As described above, if a switch having a contact is used as the means for operation input, it is necessary, in addition to providing an exclusive power line, to transfer electrical input information generated at the switch to a control processing unit via a signal line provided exclusively for the purpose. Thus, a problem arises in that the facility for collecting input information is comparatively large and bulky, particularly when there is a large distance between the operation input switch and the control processing unit and/or when the number of operation input switches is large.

According to one aspect of the invention there is provided an input apparatus comprising:
an input operation unit for input operation by an operator;
a television camera for taking the image of an operation surface of the input operation unit; and
an operation position judgment unit for extracting brightness data from the image of the input operation unit represented by a video signal obtained from the television camera, the extracted brightness data corresponding to mark regions set to superimpose a portion corresponding to operation positions of the operator, and for judging that the corresponding operation positions have been operated by the operator when a change exceeding a reference value has occurred in the extracted brightness data.

According to another aspect of the invention there is provided a method of inputting operation input information, the method comprising the steps of:
setting a plurality of mark regions which are superimposed upon image portions corresponding to operation positions against which an operator may operate within an image derived from a video signal, the video signal being obtained by picking up an image of an input operation unit by means of a television camera;
generating and storing a master pattern, after judging that the brightness of the mark regions has changed, in response to the operator operating the mark regions in a predetermined order, in a master pattern setting mode;
generating a detection pattern, on the basis of the brightness information corresponding to the plurality of mark regions, when the operator operates the input operation unit, in an observation mode; and
generating input operation information on the basis of whether the detection pattern coincides with the master pattern.

Embodiments of the present invention provide input apparatus which, when the operation input information generated by an input operation of the operator is to be supplied to the control processing unit, is capable of achieving this by means of a relatively simple facility.

In the embodiments of the invention, when the operator operates a portion of the input operation unit, for example manually, a change occurs in the brightness data of the mark regions provided at the portion corresponding to the position of such operation. Thus, judging by means of the operation position judgment unit that the position at which the change in the brightness data has occurred is the position of operation by the operator, an input operation may be accurately judged without the necessity of providing means such as a signal line or power supply line used exclusively for this purpose from the operation input unit. It is accordingly possible to achieve an operation input system having a simple and relatively small construction.

The invention will now be described by way of example with reference to the accompanying drawings, throughout which like parts are referred to by like references, and in which:
Fig. 1 is a block diagram showing an operation input system according to a first embodiment of the invention;
Fig. 2 is a front view showing a display screen of the system shown in Fig. 1 representing the image content of the video signal thereof;
Fig. 3 is a flowchart showing a brightness data processing routine;
Fig. 4 is a table showing the detailed construction of the work memory as shown in Fig. 1;
Fig. 5 is a front view showing as a second embodiment a display screen representing the input operation unit of an electronic lock system;
Fig. 6 is a front view showing as a variation of the second embodiment a display screen representing the input operation unit of a medical care system;
Fig. 7 is a front view showing as a third embodiment a display screen representing the input operation unit of an onboard door lock system;
Fig. 8 is a front view showing as a fourth embodiment a display screen representing the input operation of a keyboard system;
Fig. 9 is a front view showing as a fifth embodiment a display screen representing the input operation unit of a panel switch system;
Fig. 10 is a perspective view showing as a sixth embodiment the overall construction of a key input system; and
Fig. 11 is a front view showing the screen display of Fig. 10.

### Overall Construction of One Embodiment

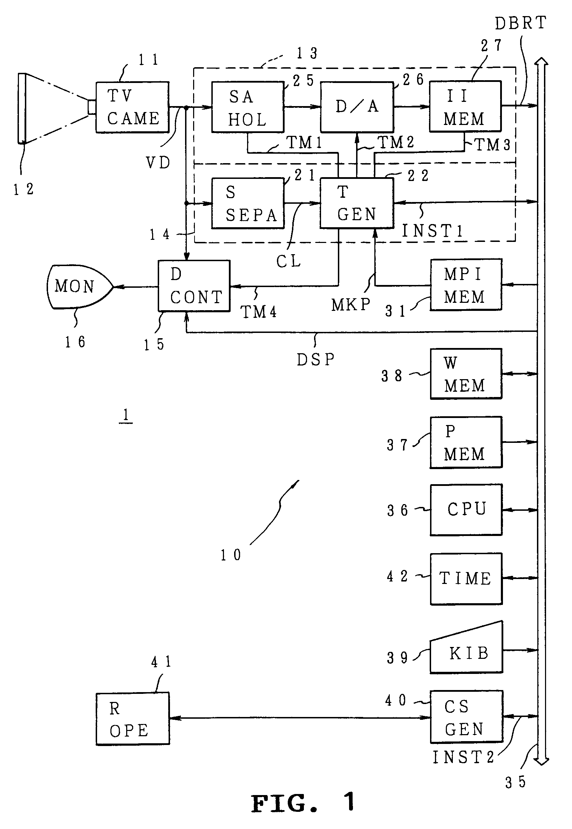

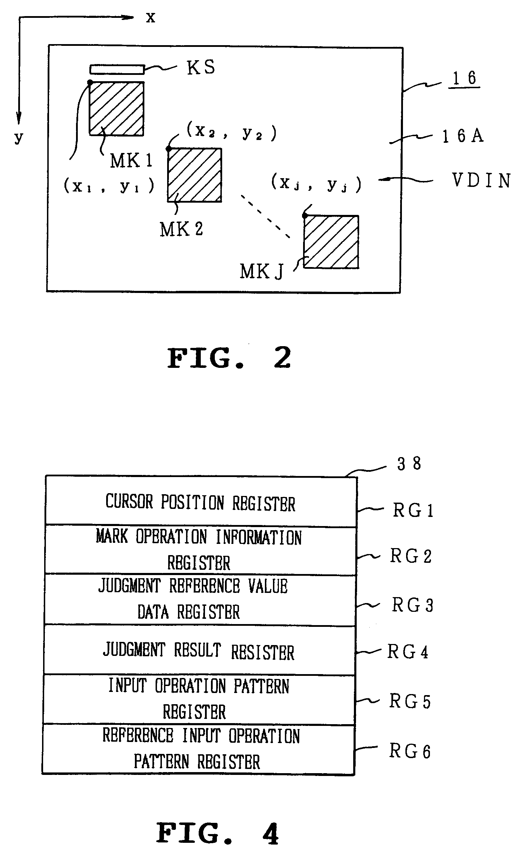

Referring to Fig. 1, an input apparatus 1 includes an operation position judgment unit 10 in which a video signal VD obtained by taking the image of the surface, namely the operation surface of an input operation unit 12 by means of a television camera 11, is supplied to a video data input unit 13 and a timing control unit 14. The video signal VD is also supplied by way of a display control unit 15 to a monitor 16. Thereby, as shown in Fig. 2, the image of the operation surface of the input operation unit 12 (referred to as the input operation unit image VDIN) is displayed on a display screen 16A of the monitor 16.

The timing control unit 14 delivers a clock signal CL synchronized with a horizontal synchronizing signal and a vertical synchronizing signal to a timing generation circuit 22 by separating a synchronizing signal (consisting of a horizontal synchronizing signal and a vertical synchronizing signal) contained in the video signal VD at a synchronizing signal separation circuit 21.

The timing generation circuit 22 forms position data representing the current scanning position with respect to each line of the video signal VD by counting the clock signal CL. By supplying timing signals TM1, TM2 and TM3 on the basis of the position data respectively to a sample and hold circuit 25, an analog-digital converter 26 and an image information memory 27 of the video data input unit 13, a video signal corresponding to one frame is converted to digital data (such as 8-bit digital data) consisting of a predetermined number of pixels (such as 512x512 pixels) to be stored in the image information memory 27.

In addition to this, the timing generation circuit 22 compares the position data formed on the basis of the clock signal CL with mark position data MKP supplied from a mark position information memory 13. When a coincidence occurs, a timing signal TM4 is supplied to the display control unit 15 to display in a superimposed manner a single or plurality of mark indication(s) MKj (j=1, 2, ..., J) on the display screen 16A of the monitor 16 as shown in Fig. 2 together with a cursor KS on the input operation unit image VDIN based on the video signal VD.

The timing generation circuit 22 supplies a timing signal TM3 to the image information memory 27 in synchronism with the timing position information TM4 to deliver to a bus 35 brightness data DBRT which corresponds to the mark indication MKj (j=1, 2, ..., J).

Such operations of the video data input unit 13 and the timing control unit 14 are controlled and processed together with the operation of the other components constituting the operation position judgment unit 10 by using various registers provided within a work memory 38, as the operator designates a program in a program memory 37 stored by a central processing unit (CPU) 36 via the bus 35 using a key input board 39.

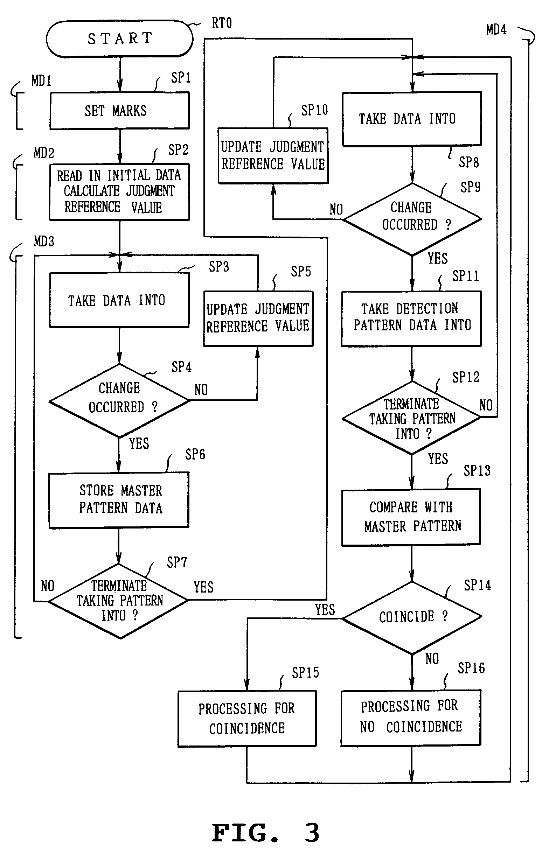

Specifically, at a mark setting mode MD1 of a brightness data processing routine RT0 as shown in Fig. 3, the CPU 36 stores in the mark position information memory 31 mark position information corresponding to the mark region MKj of the input operation unit 12 when it is entered by the operator by means of the key input board 39. In an actual example, the mark position information may include: mark position information represented by the position data (xⱼ, yⱼ) of the upper left side corner of each mark indication MKj; shape information representing the shape of the indication MKj; and other managing information. The operator operates the cursor setting key of the key input board 39 to set the cursor KS at a selected position on the display screen 16A by supplying cursor/message display data DSP to the display control circuit 15 and to cause the mark position information memory 31 to read the mark position information by supplying a setting command together with data such as mark shape data.

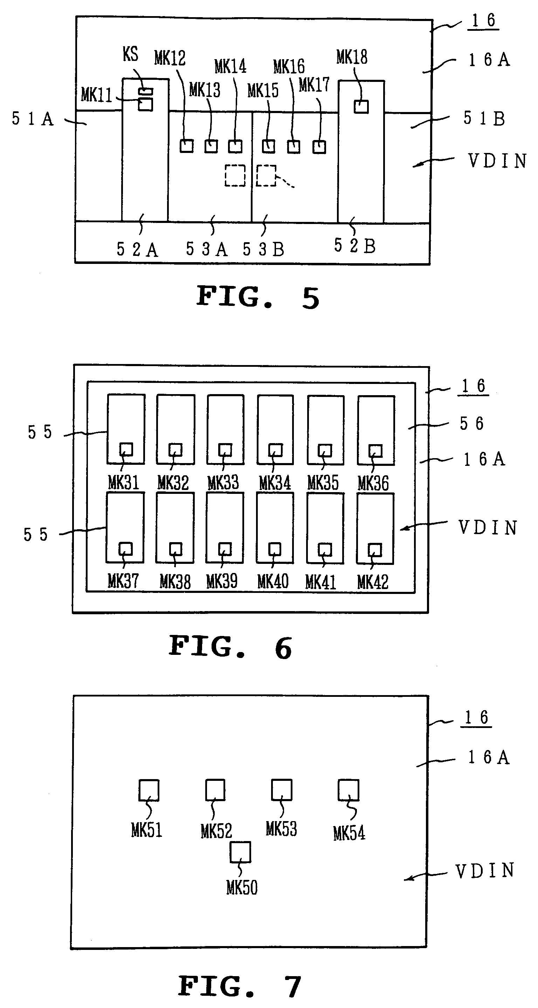

Here, as shown in Fig. 4, the cursor position is retained at a cursor position register RG1 of the work memory 38.

On the other hand, the CPU 36 supplies a command signal INT1 to the timing generation circuit 22 in an initial data read mode MD2, a master pattern setting mode MD3 and a monitor mode MD4. The CPU 36 thereby successively takes into the image data corresponding to the mark position data MKP which is included in the image data corresponding to one frame cumulated in the image information memory 27. The pixel data within the region at which the mark indication MKj is superimposed (referred to as a mark region) is added for each mark indication MKj (j=1, 2, ..., J) to be supplied to the mark operation information register RG2 of the work memory 38 (Fig. 4).

Further, in the monitor mode MD4, the CPU 36 compares the mark operation information supplied to the mark operation information register RG2 with reference value data in a judgment reference value data register RG3 for each mark indication MKj (j=1, 2, ..., J). When the value of the mark operation information exceeds the value of the judgment reference value data, it is judged that, of the input operation unit image VDIN on the display screen 16A, a change in brightness has occurred in the image of the mark region portion on which the mark indication MKj (j=1, 2, ..., J) is superimposed. The result of the judgment is stored in a judgment result register RG4.

In the case of this embodiment, the value of the mark operation information is set to be lower than the value of the reference value data, as the brightness of the input operation unit image VDIN is dark, in the state where the operator does not place a hand at the position corresponding to the mark indication MKj (j=1, 2, ..., J) of the input operation unit 12; and, when a hand is placed at a position corresponding to the mark indication MKj (j=1, 2, ...J), the value of the mark operation information exceeds the value of the reference value data as the image portion of the input operation unit image VDIN is brightened, thus making possible the detection of the fact that the operator has designated the position corresponding to the mark indication MKj (j=1, 2, ..., J) of the input operation unit 12.

In this manner, each time the operator effects an input operation to the input operation unit 12, the CPU 36 accordingly takes the result of the input operation into the judgment result register RG4. The order in which the items of input operation information are taken as a result to the judgment result register RG4 is stored in an input operation pattern register RG5 as the input operation pattern. For example, when the operator successively designates the positions corresponding to the mark indications MK1, MK2, ..., MKJ of the input operation unit 12 in that order, the order of the mark indication Nos. MK1- MK2- ... - MKJ is stored in the input operation pattern register RG5 as the input operation pattern.

Further, as the final judgment processing of a judgment operation cycle, the CPU 36 compares the input operation pattern of the input operation pattern register RG5 with the reference input operation pattern of a reference input operation pattern register RG5. When a coincidence occurs, a response command signal INST2 is supplied to a control signal generation unit 40. Thereby, a response operation demanded by the operator by means of input operation to the input unit 12 is executed by the response operation unit 41 which is provided as external control equipment to the operation input system 1.

The reference input operation pattern of the reference input operation pattern register RG6 is retained when, in the master pattern setting mode, the CPU 36 is operated so as to learn as the operator performs the operation of placing a hand in the reference operation sequence at the position corresponding to the mark indication MKj of the operation surface of the input operation unit 12.

In the case of this embodiment, the CPU 36 is initialized or updated by processing of the judgment reference value data on the basis of the mark operation information taken into the mark operation information register RG2 at a monitor operation cycle that is sequentially continued with respect to the judgment reference value data of the judgment reference value data register RG3. The time interval of the monitor time cycle and the time interval of the judgment reference value calculating cycle are retained at a timer 42 when the operator performs a designated input by means of the key input board 39 when the CPU 36 is at the mark setting mode.

In the above construction, the CPU 36 sets the operation input unit 1 as a whole to an initializing operation mode when the brightness data processing routine RT0 of Fig. 3 is started as the operator designates the mark setting mode MD1 using the key input board 39. Thereby, the mark position information corresponding to the mark indication MKj (j=1, 2, ..., J) is input to the mark position information memory 31 by way of the key input board 39 by the operator, and the time interval of the monitor operation cycle and the time interval of the judgment reference value calculation cycle are set to the timer 42.

Subsequently, when the operator designates the initial data take-into mode MD2 using the key input board 39, the CPU 36 proceeds to step SP2 to execute initial data take-into processing and judgment reference value calculation processing. In such processing, the CPU 36 takes into the mark operation information register RG2 of the work memory 38 the brightness data DBRT corresponding to the mark region of the mark indication MKj (j=1, 2, ..., J) from the image information memory 27, and the initial judgment reference value data is calculated on the basis of the brightness data DBRT to be taken into the judgment reference value data register RG3 for each mark indication MKj (j=1, 2, ..., J).

Subsequently, when the operator has designated the master pattern setting mode MD3 using the key input board 39, the CPU 36 proceeds to step SP3 where it takes in the brightness data DBRT to the mark operation information register RG2 from the image information memory 27 and, then, at step SP4, it uses the judgment reference value data of the judgment reference value data register RG3 for each mark indication MKj (j=1, 2, ..., J) to make a judgment as to whether a change has occurred.

Here, occurrence of no change means that the operator has not performed an input operation to the input operation unit 12. At this time, the CPU 36 repeats processing of the loop of steps SP4-SP5-SP3-SP4 with respect to the mark indication MKj for which the change has not occurred, and updates the judgment reference value of the judgment reference value data register RG3 at step SP5. Whereby, it retains such a reference value that the judgment reference value data of the judgment reference value data register RG3 is continually changed in accordance with drift of brightness of the input operation unit 12 at a plurality of monitor cycles.

In this state, the operator previously determines as the identification code the operation order to be regarded as the master pattern with respect to the positions corresponding to a plurality of mark indications Mkj set on the input operation unit 12 and places one's hand Successively at positions corresponding to the plurality of mark indications MKj in the order represented by the identification code.

At each time when the operator selects one of the mark indications MKj to place one's hand thereon, the CPU 36 judges at step SP4 that a change has occurred in the brightness data corresponding to the mark indication and proceeds to step SP6. Here, the CPU 36 stores the number of the mark indication MKj currently operated to the reference input operation pattern register RG6 from the judgment result register RG4.

Thereafter, the CPU 36 judges at step SP7 whether the timer 42 has designated the termination of the master pattern setting mode. When a negative result is obtained, it judges that the system is still in the master pattern setting mode and returns to the above described step SP3.

In this manner, each time when the operator inputs one by one a position corresponding to the mark display MKj of the input operation unit 12, the CPU 36 detects this at step SP4 and the numbers of the mark indications MKj which have been successively operated are taken into the reference input operation pattern register RG6 as the master pattern by means of the loop of the steps SP6-SP7-SP3-SP4-SP6.

In a short time, when the timer 42 has outputted a master pattern setting mode termination command, the CPU 36 judges this at step SP7 as an affirmative result whereby the master pattern setting mode MD3 is terminated.

Thereafter, when the operator designates the monitor mode MD4 by the key input board 39, the CPU 36 causes the monitor cycle count operation of the timer 42 to start and proceeds to step SP8 where it takes the brightness data DBRT to the mark operation information register RG2 from the image information memory 27 and then at step SP9 compares this with the judgment reference value data of judgment reference value data register RG3. Thereby, it makes a judgment as to whether a change has occurred in the mark region corresponding to the mark indication MKj of the input operation unit 12.

Here, if a negative result is obtained, this fact means that an input operation has not been effected at the input operation unit 12. At this time, the CPU 36 proceeds to step SP10 where the judgment reference value data corresponding to the mark indication MKj is updated and it then returns to the above described step SP8. Thus, the CPU 36 enters the state where it waits for an input operation to the input operation unit 12 while repeating the updating of the judgment reference value by the loop of SP8-SP9-SP10-SP8.

If, in a short time, an affirmative result is obtained at step SP9, this fact means that one of the mark regions corresponding to the mark indications MKj of the input operation unit 12 has been operated. At this time, the CPU 36 proceeds to step SP11 where the number of the operated mark indication MKj is took into the input operation pattern register RG5 on the basis of the judgment result.

Thereafter, the CPU 36 proceeds to step SP12 where it makes a judgment as to whether the take-into operation of the pattern has been terminated by judging whether a monitor cycle termination signal has been obtained from the timer 42. If a negative result is obtained, it returns to the above described step SP8. In this manner, at each time when the mark region corresponding to the mark indication MKj of the input operation unit 12 of the operator is operated, the CPU 36 detects this at step SP9 by the loop of the steps SP8-SP9-SP11-SP12-SP8 and this is taken into the input operation pattern register RG5 as the detection pattern data.

When, in a short time, a monitor cycle commend signal is delivered from the timer 42, the CPU 36 detects this at step SP12 as an affirmative result and proceeds to step SP13 where processing is executed in which the input operation pattern of the input operation pattern register RG5 is compared with a master pattern of the master pattern register RG6.

Here, since, when one monitor cycle has been completed, the order by which the operator operated the positions corresponding to the mark displays MKj of the input operation unit 12 is stored to the input operation pattern register RG5, the CPU 36 makes a judgment at step SP14 as to whether the operation input result coincides with the master pattern.

Here, if an affirmative result is obtained, this means that the operator effected an input operation at the input operation unit 12 following a pattern exactly the same as the master pattern which has been previously determined. At this time, the CPU 36 proceeds to step SP15 to execute processing for the result of coincidence whereby the CPU 36 causes the response operation unit 41 to respond by means of the control signal generation unit 40.

Upon completion of such processing, the CPU 36 returns to the above described step SP8 to enter a new monitor cycle.

On the other hand, if a negative result is obtained at step SP14, this means that the operator did not operate the input operation unit 12 by the previously determined order of operation. In this case, the CPU 36 proceeds to step SP16 to execute processing for the result of coincidence, where the CPU 36 effects processing by way of the control signal generation unit 40 so as not to cause the response operation unit 41 to respond.

After completion of this processing, the CPU 36 returns to the above described step SP8 to enter the next monitor cycle.

According to the above construction, it is not necessary to furnish an exclusive signal line or power line for the operation input unit 12 when input operation information corresponding to the input operation if the operator is to be obtained from the input operation unit 12. Thus, it is possible to achieve an operation input unit 1 which is capable of securely taking in the operation input corresponding to an operation by the operator with a construction which is simple as a whole.

It should be noted that a description has been given of the above construction with respect to a case where the sequence of the numbers of the mark indications MKj is used as the pattern data on the basis of the order of input operation pattern by which the mark regions corresponding the mark indications MKj of the input operation unit 12 are operated. However, a similar advantage as in the above described case may also be obtained with a construction where binary data representing whether the mark indications MKj (j=1, 2, ..., J) have been operated may be constructed instead as pattern data representing the first, second ... Jth bits.

Further, in the above described construction, the timing indicating the completion of a pattern take-into operation is detected as a timing in terms of time using the master pattern setting signal or the monitor cycle signal obtained from the timer 42. Other methods, however, may be used instead. For example, when the operator inputs a pattern take-into completion command from the key input board 39, it may be judged in accordance with this that the take-into of the pattern has been completed.

Further, in the above described embodiment, a description has been given with respect to a case where judgment as to whether the mark region is operated is made on the basis of whether the operator has placed one's hand at the mark region corresponding to the mark indications MKj (j =1, 2, ..., J) of the operation surface of the input operation unit 12. However, other components may also be placed instead of the operator's hand. In essence, it suffices to use such means by which the change in the brightness data DBRT is sufficiently large for the practical purpose when it is placed on the mark region.

### Electronic Lock System

Fig. 5 shows a case of applying the present invention to an electronic lock system for controlling locking and unlocking of a residence, office or the like by means of an auto locking method, where, for example, the facility around the gate to the residence is used as the input operation unit 12. In the case of this embodiment, the image of gateposts 52A and 52B and the doors 53A and 53B therebetween which are provided as the input operation unit 12 between the fences 51A and 51B is taken from the front by the television camera 11.

Thus, as shown in Fig. 5, the image around the gates is shown as the input operation unit image VDIN on the display screen 16A of the monitor 16, so that the operator is able to set a plurality of, for example eight, mark indications MK11 - MK18 at predetermined positions on the gates.

Further, in the case of this embodiment, the mark indications MK11, MK12, MK13 and MK14 are set in a row from left to right on the left-side gatepost 52A and the left side door 53A and the mark indications MK15, MK16, MK17 and MK18 are set horizontally in a row on the right side door 53B and the gatepost 52B.

The call words "OPEN", "SE", "-SA", "-MI", "OPEN", "SE", "-SA" and "-MI" are previously assigned to the mark indications MK11, MK12, MK13, MK14, MK15, MK16, MK17 and MK18, respectively. Thus, the operator places one's hand successively at the positions of the mark indications MK11, MK12, MK13, MK14, MK15, MK16, MK17 and MK18 as if one speaks the call words "OPEN SESAMI" twice to the gates.

At this time, as the brightness of the image portion of the corresponding indication mark lightens successively each time the operator places one's hand at the positions corresponding to the indication marks MK11, MK12, MK13, MK14, MK15, MK16, MK17 and MK18, the CPU 36 takes this into the mark operation information register RG2 and it compares this with the judgment reference value in the judgment reference value data register RG3 to thereby take the judgment result to the judgment result register RG4. As a result, an input operation pattern is stored to the input operation pattern register RG5, which represents the fact that the call word consisting of "OPEN SESAMI", "OPEN SESAMI" has been inputted, i.e., data representing the fact that an input operation has been effected by the pattern which is formed by a series MK11-MK12-MK13-MK14-MK15-MK16-MK17-MK18 of indication mark numbers. The CPU 36 uses this data to subsequently make a judgment as to whether it coincides with the reference input operation pattern which has been inputted to the reference input operation pattern register RG6.

If a coincidence occurs, the CPU 36 supplies a response command signal INST2 to the control signal generation unit 40. Thereby, an auto lock mechanism provided for locking or unlocking the doors 53A and 53B is operated as the response operation unit 41 to unlock the lock mechanism. Thus, the operator is able to open the doors 53A and 53B.

According to the above construction, as the operator simply effects an operation of placing one's hand in a predetermined order at previously determined positions on the gates of a residence, it is possible to securely judge that the operator has effected an input operation for unlocking so as to remove the electronic lock. In this manner, it is possible to eliminate the necessity of providing a signal line or power line exclusively for switch operation from the gate which serves as the operation input means of the operator.

While, in the above described embodiment, the positions and the order of placing a hand correspondingly to the indication marks are inputted in the master pattern setting mode by the CPU 36 using a learning information, a similar advantage as in the above described case may also be obtained such that the operator alternatively uses the key input board 39 to effect the input operation.

Further, while, in the above described embodiment, a description has been given with respect to a case where the judgment as to whether a hand is placed on the positions of the eight mark indications is judged one by one, they may alternatively be divided into sets each consisting of two, i.e., into the set "OPEN" and "SA" and the set of "-SE" and "-MI" so as to detect the unusualness with respect to each set.

Further, the operation of the positions of "OPEN" and "-MI" may be selected to be relatively longer than the operation of the other positions such as in the manner of "OPEN", "-", "SE", "-SA", "-MI", "-", by combining the relative lengths of input operation time as the reference input operation pattern.

Further, while, in the above described embodiment, a description has been given with respect to a case where the eight indication marks MK11-MK18 are provided as a set on the gates, it is also possible to make the number of the indication marks to one and to cause the mark operation information register RG2 to take a mark operation information into, such as one coded by varying the relative length of the operation time of the indication mark.

Further, in the above described embodiment, it is also possible to inform the operator of the fact that the system is currently in the process of a normal take-into operation such as by lighting up an LED on the case surface of the television camera 11 or on the case surface of the key input board 39, or by indicating by means of a buzzer, when a change has occurred in the input operation unit image VDIN with respect to one of the mark indication positions.

### Medical Caring System

This embodiment shows a case where the present invention is applied to a medical caring system which may be used such as in a hospital. In this case, as shown in Fig. 6, a message board 56 having a plurality of, for example twelve, strips 55 arranged thereon is placed at a patient's bedside as the input operation unit 12. The message board 56 is taken by the television camera 11 to take into the image of the strips 55 as video signal VD.

In this case, a mark region corresponding to the indication marks MK31, MK32, ..., MK42 is set for example on the lower portion of each strip 55. When the patient selects and puts his hand over one of the strips on the message board 56, the mark operation information corresponding to the strip selected by the patient is taken into the mark operation information register RG2 as the brightness of the corresponding indication mark changes.

Here, a message of the patient is previously written on each of the strips 55 as, for example, the words of "want to die" on the strip 55 of the mark indication MK31, and written respectively in a similar manner are the words of: "want to live" on the strip 55 of the mark indication MK32; "feel pain" on the strip of the mark indication MK33; "nurse A" on the strip of the mark indication MK34; "attendant" on the strip of the mark indication MK35; "mom" on the strip of the mark indication MK36; "am hungry" on the strip of the mark indication MK37; "diaper" on the strip of the mark indication MK38; "doctor" on the strip of the mark indication MK39; "bath" on the strip of the mark indication MK40; "turn on television" on the strip of the mark indication MK41; and "turn off television" on the strip of the mark indication 42. The patient is to select the content of a desired message by reading these message words.

In the above construction, when a change in brightness occurs on one of the mark indications MK31-MK42, the CPU 36 delivers to the control signal generation unit 40 the response command signal INST2 corresponding to the content of the strip written on the mark indication which has been changed in brightness. Thereby, a responding processing may be performed by the response operation unit 41 correspondingly to the content of the message of the patient.

For example, if the mark indication MK35 has been designated, the CPU 36 judges as that a message has been issued to the "attendant" stated on that strip and informs one, via the control signal generation unit 40, of the patient's message by means of a buzzer at the "attendant" room as a part of the response operation unit 41.

Further, if the fact that a change in brightness has occurred in the mark indication MK39 is found, the CPU 36 judges as that the message stated on the strip is to "doctor" and searches, as a part of the response operation unit 41 via the control signal generation unit 40, the medical doctor of the patient. For example, a message "Mr. X in Room No. Y is calling Dr. D" is displayed on the television display screen in the room of the medical staff in charge. Note that, at the same time, the room of the patient may be shown by the television camera 11.

According to the above construction, various messages of the patient may be taken into the operation input unit 1 as the image of an television camera, whereby a care may be taken in accordance with the condition of the health of the patient. For example, even in the state where it is necessary to keep a watchful eye as in a serious case, the patient can input his message accurately if he is able to move his hand or arm just a little.

It should be noted that, in the above described embodiment, a single message board is set as the input operation unit 12 and the image thereof is taken by the television camera 11. However, by taking a plurality of message boards respectively by a plurality of corresponding television cameras 11 to selectively take into the video signal VD, a care is securely taken for a plurality of patients who have the plurality of message boards placed respectively at their bedside.

Further, while, in the above described embodiment, a description has been given with respect to an embodiment adapted such that the video signal VD taken by the television camera provided in the patient's room is continually reflected on the monitor 16, it is not necessary to display it on the monitor 16 if, for example, the protection of privacy is required. Even in such a manner, the CPU 36 is able to accurately read the input operation to the strip on the basis of the mark position information of the indication marks MK31-MK42 set in the mark position information memory 31.

### Onboard Door Lock System

Fig. 7 shows a case of applying the present invention to an onboard door lock system for electronically locking/unlocking the door of a car. In this case, by introducing power for the operation input unit 1 by detecting the fact that a person has been approaching the car in addition to the construction of Fig. 1, the operation input unit 1 starts processing for reading to the image information memory 27 the video signal VD of the input operation unit 12 taken by the television camera 11.

Here, the CPU 36 calculates the reference value data on the basis of the video data corresponding to the mark indication MK50 for initialization provided at a predetermined position on the display screen 16A to write it to the judgment reference value data register RG3. Thereafter, it monitors whether changes in brightness occur in a predetermined reference input operation pattern with respect to a plurality of mark indications MK51-MK54. When changes in brightness occur in the same pattern as the reference input operation pattern, it is judged as that the operator has effected an input operation for unlocking the door of the car and the electronic lock system constructing the response operation unit 41 is caused to unlock via the control signal generation unit 40.

On the other hand, when it desired to lock the door, a pattern which is different from (or the same as) the undoing of the door lock is previously set to the reference input operation pattern register as the operation pattern with respect to a plurality of mark indications MK51-MK54. The CPU 36 causes a locking operation of the electronic lock system constructing the response operation unit 41 via the control signal generation unit 40 when the operator has effected an input operation in the same input operation pattern as the door lock reference input operation pattern.

According to the above construction, an operation using a key is not required when the onboard door is to be locked/unlocked.

It should be noted that, while, in the above described embodiment, a description has been given with respect to a case where the television camera 11 and the monitor 16 are provided exclusively for the onboard door lock system, a similar advantage as in the above described case may also be obtained by making such as a television camera and a monitor provided for navigation or for checking the safety of the left and right sides and the rear of the car to serve two purposes.

### Keyboard System

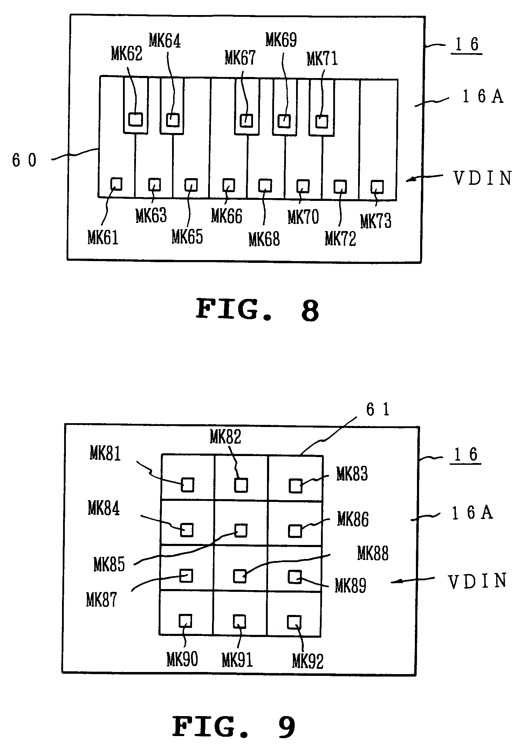

Fig. 8 shows a case of applying the present invention to a keyboard system used as an electronic musical instrument. This is the case where the operator as a performer places one's hand on the keyboard 60 of the keyboard system to effect an input of the operation input information. In this case, mark indications MK61-MK73 are set at the operation positions of the white keys and the black keys constructing the keyboard 60.

When a change in brightness occurs in one or more than one of the mark indications MK61-MK73 as the operator plays the keyboard, the CPU 36 judges the tone of the key designated by comparing the input operation pattern with the reference input operation pattern of the reference input operation pattern register RG6. A response command signal INST2 representing the judgment result is supplied to the control signal generation unit 40 to drive a music note signal generation device constructing the response operation unit 41. Thereby, a musical sound of the corresponding tone is generated.

According to the above construction, when a number of keys are selectively played, the tones thereof may be accurately judged. Since, in this manner, it is not necessary to provide a key switch for each key, the construction of the keyboard 60 serving as the input operation unit 12 may furthermore be simplified to the extent that exclusive signal line and power line are not required.

It should be noted that, while, in the above described embodiment, a description has been given with respect to a case where the keyboard of a keyboard system of an ordinary size is directly taken by the television camera 11, the size of the keyboard 60 is not limited to this and may be set to various sizes.

For example, in the case of using a figure of a small keyboard, it is possible to accurately judge the performance operation input even if the keyboard is extremely small, by taking the input operation unit image VDIN magnified such as by a microscope as the video signal VD.

To the contrary, for example, by taking the figure of a large keyboard formed on a play ground of an elementary school by a television camera 11 for example from the roof of the school building, the school children's stepping on the figure of the keyboard may be detected as a change in brightness of the mark indications MK61-MK73 to generate a corresponding musical sound.

Further, the place at which the figure of a keyboard is placed is not limited to a case of placing it horizontally from side to side near the operator's hands as is the case for an ordinary electronic musical instrument. For example, a musical sound corresponding to the performance may be accurately generated in a similar manner as in the above described case also by depicting the figure of an imitated keyboard on the wall and by effecting such operation as placing a finger on each key thereof.

Furthermore, in the above described embodiment, a description has been given with respect to a case where shape and arrangement of each key of the keyboard 60 are applied to be identical to those of the keyboard system of an electronic musical instrument. However, the configuration of the keyboard system or the shape of each key are not limited to this any may be selected to be an optional shape. In essence, a keyboard system similar to the above described case may be achieved by setting mark indications correspondingly to each key.

### Panel Switch System

Fig. 9 shows a case of applying the present invention to a panel switch system. A panel switch 61 is reflected on the display screen 16A as the input operation unit image VDIN. Mark indications MK81-MK92 are provided respectively on the key tops forming the panel switch 61.

Thus, when a change in brightness is continued for more than a certain time period by illuminating for example with a flashlight the mark region corresponding to the mark indications MK81-MK92 that correspond to each key top of the panel switch 61 forming the input operation unit 12, the CPU 36 judges this as that the switch has been operated for inputting and causes a panel switch output unit forming the response operation unit 41 via the control signal generation unit 40.

According to the above construction, a switch output corresponding to the switch operated for input by the operator may be securely generated. Thus, it is not necessary to provide an exclusive signal line of power line for each key of the panel switch 61, and, to such extent, it is possible to achieve a panel switch system having a simple construction.

It should be noted that, in the above described embodiment, a panel switch 61 having an ordinary construction is used as the input operation unit 12 which is taken by the television camera 11. However, in a similar manner as in the case of the above described keyboard system, an output corresponding to the operation input may be securely generated also by using an extremely small figure or an extremely large figure as the panel switch 61. In addition, an advantage similar to that in the above described case may be obtained also by setting the panel switch 61 on the wall or by deforming the shape of each key into various shapes.

### Key Input Device

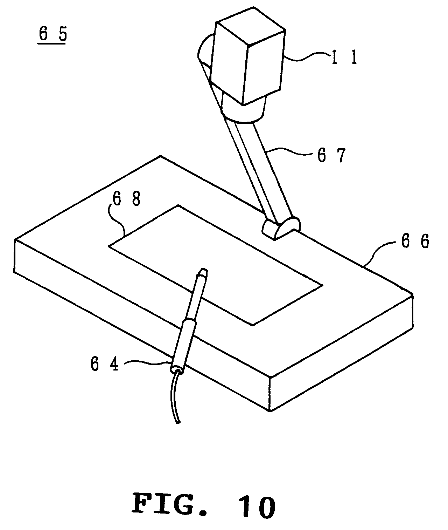

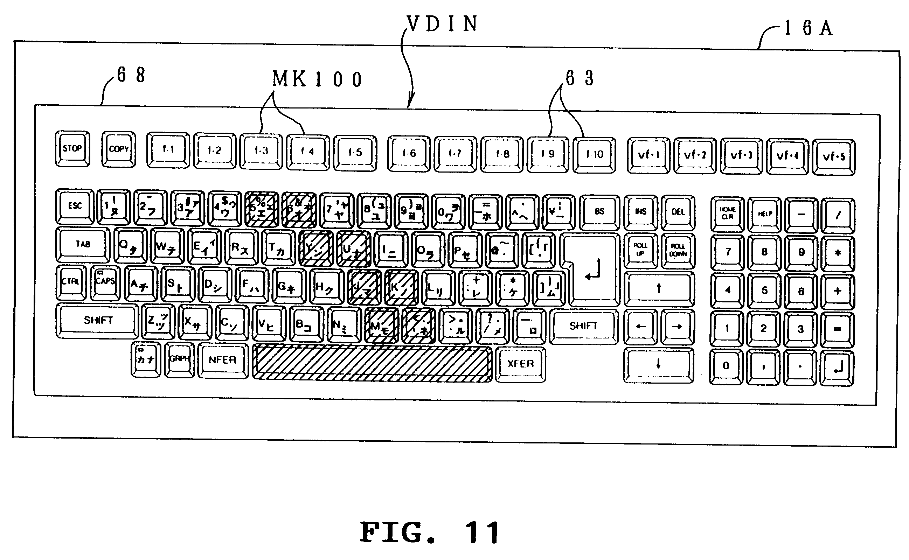

Fig. 10 and Fig. 11 show a case of applying the present invention to a key input device. An arrangement of a number of key input switches (for example the keyboard for a personal computer) is reflected on the display screen 16 as the input operation unit image VDIN.

Mark indications MK100 are formed respectively on the image portion of the key tops of the key input switches 63. Thus, when a pen-like indicator 64 is placed on each key top, the brightness within the mark indication MK100 is changed from the brightness of the key top to the brightness of the indicator 64.

In the case of this embodiment, for the key input device 65, a television camera 11 is mounted in a manner adjustable in rotation as shown in Fig. 10 on the upper end of a support leg 67 supported in a manner capable of being inclined in the front and rear direction with respect to a flat support base 66.

A key input switch display sheet 68 representing for example by printing or painting the arrangement of the key input switches 63 is pasted onto the surface of the support base 66. The image signal VD obtained as the television camera 11 takes the key input switch display sheet 68 is displayed on the display screen 16A of the monitor 16 of the operation position judgment unit 10 (Fig. 1).

In the above construction, in the mark setting mode MD1 (Fig. 3), the operator sets the mark indications MK100 respectively for the display of the key tops of each key input switch 63 and, thereafter, in the initial data take-into mode MD2, presses the indicating stick 64 against the key top display on the key input switch display sheet 68. At this time, the input switch provided at the end portion of the indicating stick 64 is operated to be clicked. Thereby, in such pressed state, the brightness information within the mark indications MK100 on the display screen 16A is read as the initial data to the operation position judgment unit 10 to thereby retain a judgment reference value.

Thereafter, when switching is effected from the setting mode to the monitor mode, since the brightness changes of the mark indications MK100 corresponding to the key top portion against which the indicating stick 64 is pressed by the operator, an operation input data having the code assigned to the key top operated by the operator is formed by the operation position judgment unit 10.

Here, if it is desired to indicate a desired key input switch 63 by the indicating stick 64, such as the end portion, the center portion and the base portion of the indicating stick 64 are taken by the television camera 11 when a state is achieved where the terminal end of the indicating stick 64 is caused to abut against the key top of the desired key input switch 63. Thereby, there occur some key input switches 63 which cannot be taken by the television camera 11 as they are hidden such as by the terminal end portion, the center portion and the base portion. Thus, as a result, an operation input signal representing the fact that an operation has been effected may be obtained also from the mark indications of the key input switches hidden such as by the terminal end portion, the center portion and the base portion of the indicating stick 64.

In the case of this embodiment, when the operator holds an indicating stick 64 by his right hand, the operation position judgment unit 10 supposes as that the key input switch positioned at the leftmost side of the key input switches 63 for which operation input information has been obtained is operated and delivers the corresponding code data as a significant operation input data.

For example, if, as shown in Fig. 11 by the slant lines, "5" key, "6" key, "Y" key, "U" key, "J" key, "K" key, "M" key, "<" key and "space" key are hidden by the indicating stick 64 as the operator effects an input operation by grasping the indicating stick by his right hand, the operation position judgment unit 10 judges as that "5" key positioned at the leftmost side is the key currently operated and delivers a corresponding operation input data.

In actuality, such judgment of the operation position judgment unit 10 is executed by selecting a mark indication MK100 having the minimum value as its x-coordinate value (Fig. 2) from the indication marks 100 on which the indicating stick 64 is reflected.

On the other hand, when the operator effects an input operation by grasping the indicating stick 64 by his left hand, the operation information obtained from the key positioned at the rightmost side among the keys hidden by the indicating stick 64, i.e., from the mark indication with the largest x-coordinate value is selected as a significant information at the operation position judgment unit 10.

According to the above construction, when an input operation is effected with respect to more than one of mark indications MK100 among the plurality of mark indications MK100 set on the display screen 16A, only the information obtained from one mark indication is judged as a significant information. Thereby an operation input information may be securely obtained. In this manner, it is possible to eliminate the necessity of providing a keyboard with a relatively complicated structure where a large number of key switches are arranged.

It should be noted that, while, in the above described embodiment, a description has been given with respect to a case where a single indicating stick 64 is provided, similar advantage as those described above may also be obtained by providing two indicating sticks respectively for the left hand and the right hand.

Further, in the above described embodiment, a selection is made based on the x-coordinate axis when one mark indication MK10 is to be selected. However, such selection may also be made based on the y-coordinate axis or on the x and y-coordinate axes.

Furthermore, in the above described embodiment, a description has been give with respect to a case where only one key input switch indication sheet 68 is used. However, it is also possible to previously provide a plurality of different types of sheets and to previously store to the memory of the operation position judgment unit 10 the marks corresponding to the positions of the keys indicated on each sheet, so that a sheet selection switch is used and the sheet currently used is selected by the sheet selection switch to read out the corresponding data from the data stored in the memory.

In this manner, various kinds of key input operation may be constituted by a simple operation of merely changing the key input switch indication sheet 68.

In this case, various constructions such as of using a hard switch or of printing a mark representing its type on each key input switch indication sheet 68 may be applied as the sheet selection switch.

In the case of the above described embodiment, the indicating stick 64 has at its terminal end a switch which is operated when pressed so as to read in the key input information by means of the output of the switch. Instead of the switch of the indicating stick 64, it is also possible to separately use a switch such as a foot switch which is operated by other input operation.

Further, in the above described embodiment, a description has been given with respect to a case where the image of the key input switch indication sheet 68 taken by the television camera 11 is not displayed on the monitor 16. Alternatively, the image of the key input switch indication sheet 68 may be displayed on the monitor 16 so that the operator is able to effect an input operation while checking such display.

In this case, it is also possible to take an information source such as a photograph at a specified area such as the center portion of the display screen of the monitor 16 and to take the key input switch 36 at other portion such as the lower portion or the right end portion of the screen, so that only a specified area of the screen is stored to the memory or that data transmission is effected by using a telephone line.

Further, as the indicating stick 64, an LED may be attached to the terminal end thereof or a light guide (optical fiber) may be provided, so that change in brightness of the operated mark indications MK100 may be increased by causing the terminal end of the indicating stick 64 to emit a light or, conversely, by making it darker. Thereby, it is possible to accurately read occurrence/nonoccurrence of an operation.

Further, it is also possible that the key input switch indication sheet 68 pasted onto the support base 66 may be illuminated from the underside thereof to take the transmitted light by the television camera 11, or, alternatively, a portion (the center portion for example) of each switch indication of the key input switches 63 is formed by a reflecting material while the remaining portion is formed by a transparent material, so as to accurately determine occurrence/nonoccurrence of an operation.

As previously described, according to embodiments of the present invention, mark indications are set at positions corresponding to predetermined input operation positions in the video signal obtained by taking an image of the input operation unit by a television camera, so that an occurrence of change in brightness in the mark region corresponding to the mark indication is judged as an input operation by the operator. It is thereby possible to achieve an operation input system having an overall simple and relatively compact construction since it is not necessary to provide an exclusive signal line or power line from the input operation unit.

## Claims

1. An input apparatus comprising:
an input operation unit (12) for input operation by an operator;
a television camera (11) for taking the image of an operation surface of the input operation unit (12); and
an operation position judgment unit (10) for extracting brightness data from the image of the input operation unit (12) represented by a video signal (VD) obtained from the television camera (11), the extracted brightness data corresponding to mark regions (MKj) set to superimpose a portion corresponding to operation positions of the operator, and for judging that the corresponding operation positions have been operated by the operator when a change exceeding a reference value has occurred in the extracted brightness data.

2. Apparatus according to claim 1, comprising a monitor means (16) for indicating the video signal (VD) on its screen as an image of the input operation unit (12), wherein the operator may set the mark region (MKj) on the image of the screen to be superimposed while viewing the image.

3. Apparatus according to claim 1 or claim 2, wherein the input operation unit (12) is composed of an entrance and peripheral portions thereof (Fig. 5).

4. Apparatus according to claim 1 or claim 2, wherein the input operation unit (12) is composed of a message board (Fig. 6).

5. Apparatus according to claim 1 or claim 2, wherein the input operation unit (12) is composed of a door of a car and peripheral portions thereof (Fig. 7).

6. Apparatus according to claim 1 or claim 2, wherein the input operation unit (12) is composed of a panel switch (Fig. 9).

7. Apparatus according to claim 1 or claim 2, wherein the input operation unit (12) is composed of an operation panel (60) for a musical instrument (Fig. 8).

8. Apparatus according to claim 1 or claim 2, wherein the input operation unit (12) is composed of a component (68) carrying a representation of a key input device for a computer (Figs. 10 and 11).

9. A method of inputting operation input information, the method comprising the steps of:
setting a plurality of mark regions (MKj) which are superimposed upon image portions corresponding to operation positions against which an operator may operate within an image derived from a video signal (VD), the video signal (VD) being obtained by picking up an image of an input operation unit (12) by means of a television camera (11);
generating and storing a master pattern, after judging that the brightness of the mark regions (MKj) has changed, in response to the operator operating the mark regions (MKj) in a predetermined order, in a master pattern setting mode (MD3);
generating a detection pattern, on the basis of the brightness information corresponding to the plurality of mark regions (MKj), when the operator operates the input operation unit (12), in an observation mode (MD4); and
generating input operation information on the basis of whether the detection pattern coincides with the master pattern.

10. A method according to claim 9, including the steps of:
calculating a judgment reference value based on an initial brightness, after reading out the initial brightness corresponding to the plurality of mark regions (MKj), when the operator does not operate the input operation unit (12); and
judging that the brightness of the mark regions (MKj) has changed, when the brightness of the mark regions (MKj) exceeds the judgment reference value, in the master pattern setting mode (MD3).

11. A method according to claim 10, wherein the judgment reference value is updated with a further judgment reference value calculated from brightness information which has been judged as representing that there is no change in the observation mode (MD4).
